# EUROPEAN PATENT APPLICATION

(11) **EP 2 597 612 A1**
(43) Date of publication of application: **29.05.2013**
(21) Application number: 12186458.1
(22) Date of filing: 28.09.2012
(51) Int. Cl.: G06T 7/00, H04N 13/02

(54) **Digital photographing apparatus and control method thereof**

(30) Priority: 24.11.2011 KR 20110123668
(71) Applicant: Samsung Electronics Co., Ltd., Suwon-si, Gyeonggi-do, 443-742 (KR)
(72) Inventor: Kim, Seong-hyun, Gyeonggi-do (KR)
(74) Representative: Fearnside, Andrew Simon

(57) **Abstract**

By determining reliability by a deviation between a left image and a right image to guide a user to use a correction algorithm only when sufficient reliability is secured and presenting an image to which an automatic correction algorithm is applied to perform fine adjustment, the user may capture a higher quality 3D image. A method of controlling a digital photographing apparatus includes: capturing a left image and a right image received from a left lens and a right lens, respectively; calculating Sum-of-Absolute-Difference (SAD) values of the right image compared with the left image; determining a reliability indicating a deviation of a moved position of the right image compared with the left image based on a degree that positions at which smallest SAD values are obtained deviate from an average position; and guiding a user to recapture or not based on the determined reliability.

## Description

### CROSS-REFERENCE TO RELATED PATENT APPLICATION

This application claims the priority benefit of Korean Patent Application No. 10-2011-0123668, filed on November 24, 2011, in the Korean Intellectual Property Office, which is incorporated herein in its entirety by reference.

### BACKGROUND

### 1. Field of the Invention

The invention relates to a digital photographing apparatus and a control method thereof.

### 2. Description of the Related Art

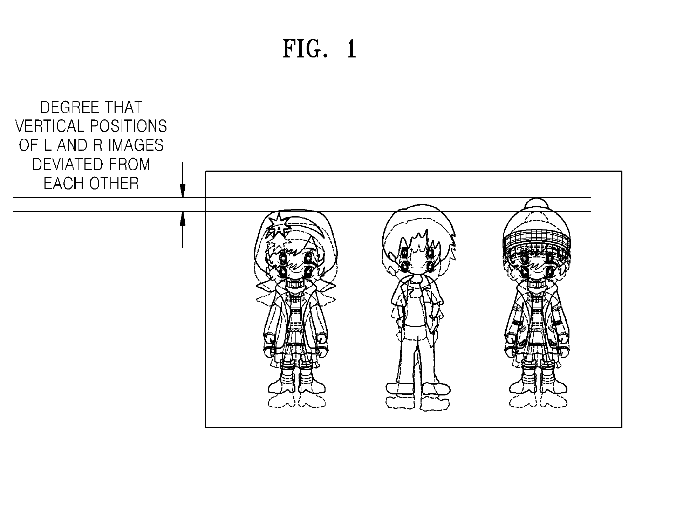

In general, when a three-dimensional (3D) e.g. stereoscopic converter lens is attached to a two-dimensional (2D) digital photographing apparatus, left and right central axes may move due to device tolerances, causing deviation of vertical positions of images, as shown in FIG. 1. To address this problem, when a 3D converter lens is attached to a 2D digital photographing apparatus, a routine that calculates a movement amount of L and R central axes by comparing and analyzing left and right images and corrects the movement amount may be performed. When automatic correction is not performed, a user may perform manual correction by attaching a lens cover for correction to the 2D digital photographing apparatus.

The automatic central axis correction performed when a pattern of an image input from attachment of a 3D converter lens as in the prior art may distort the image before the automatic central axis correction is performed. In addition, when a lens cover for correction is attached in addition to the 3D converter lens, the lens cover for correction needs to be bought in addition to the 3D converter lens.

### SUMMARY

According to the present invention there is provided an apparatus and method as set forth in the appended claims. Other features of the invention will be apparent from the dependent claims, and the description which follows.

The invention provides a digital photographing apparatus that enables a user to capture higher quality 3D (e.g. stereoscopic) images by determining reliability by a deviation degree of a captured left image and right image, guiding the user to use a correction algorithm when reliability equal to or more than a predetermined level is secured, and guiding the user to view an image to which an automatic correction algorithm is applied and perform fine adjustment, and a control method thereof.

According to an aspect of the invention, there is provided a method of controlling a digital photographing apparatus, the method including: capturing a left image and a right image received from a left lens and a right lens, respectively; calculating Sum-of-Absolute-Difference (SAD) values of the right image compared with the left image; determining a reliability indicating a deviation of a moved position of the right image compared with the left image based on a degree that positions at which smallest SAD values are obtained deviate from an average position; and guiding a user to recapture or not based on the determined reliability.

The guiding the user to recapture or not based on the determined reliability may be output as a message.

The guiding may include guiding the user to recapture when the determined reliability is low, i.e., greater than a first reference value.

The guiding may include recommending the user to recapture when the determined reliability is medium, i.e., equal to or less than a first reference value and greater than a second reference value.

The guiding may include guiding the user to maintain a current capturing state when the determined reliability is high, i.e., equal to or less than a second reference value.

The method may further include correcting the deviation of the moved position of the right image compared with the left image after guiding the user to maintain the current capturing state.

The correcting of the deviation may include moving a read start position of the right image compared with the left image by the deviation and reading the right image.

The method may further include displaying a deviation correction degree as a guideline before correcting the deviation.

The correcting of the deviation may include adjusting the deviation correction degree by moving the guideline in response to user input.

The method may further include displaying the deviation-corrected left and right images after correcting the deviation.

The calculating of the SAD values may include: generating N reference blocks having different positions in the left image; moving blocks in the right image corresponding to the first to Nth reference blocks in the left image within a moving range; and calculating SAD values by summing differences between pixels of each of the first to Nth reference blocks and pixels of each of the moved blocks.

The determining of the reliability may include: extracting positions of N blocks at which the smallest SAD value is obtained from the right image; calculating an average value of the N extracted block positions; calculating an average difference between the calculated average value and position values of the N blocks; and determining low reliability if the average difference is greater than a first reference value, medium reliability if the average difference is equal to or less than the first reference value and greater than a second reference value, and high reliability if the average difference is equal to or less than the second reference value.

According to another aspect of the invention, there is provided a digital photographing apparatus including: a calculator for calculating SAD values of a right image captured from a right lens compared with a left image captured from a left lens; a determiner for determining a reliability indicating a deviation of a moved position of the right image compared with the left image based on a degree that positions at which smallest SAD values are obtained deviate from an average position; and a controller for guiding a user to recapture or not based on the determined reliability.

The controller may output a message recommending whether the user recaptures or not based on the determined reliability.

The controller may guide the user to recapture when the determiner determines the reliability as a low reliability that is greater than a first reference value, recommend the user to recapture when the determiner determines the reliability as a medium reliability that is equal to or less than the first reference value and greater than a second reference value, and guide the user to maintain a current capturing state when the determiner determines the reliability as a high reliability that is equal to or less than the second reference value.

If the determined reliability is equal to or less than the second reference value, the controller may guide the user to maintain the current capturing state and correct a deviation of a moved position of the right image compared with the left image.

The controller may move a read start position of the right image compared with the left image by the deviation and read the right image.

The controller may display a deviation correction degree as a guideline before correcting the deviation.

The controller may receive a signal for adjusting a deviation correction degree by moving the guideline according to user input, and performing correction by the deviation correction degree input by the user.

The controller may display the deviation-corrected left and right images.

### BRIEF DESCRIPTION OF THE DRAWINGS

The above and other features and advantages of the invention will become more apparent upon review of detail exemplary embodiments thereof with reference to the attached drawings, in which:
FIG. 1 is an example in which a vertical position of a 3D captured image is deviated according to the prior art;
FIG. 2 is a block diagram of a digital camera described as a digital photographing apparatus, according to an embodiment of the invention;
FIGS. 3A-3C are illustrative diagrams for describing an SAD algorithm with arbitrary left and right images;
FIGS. 4A-4C are illustrative diagrams for describing the SAD algorithm with other arbitrary left and right images;
FIG. 5 is a detailed block diagram of the digital signal processor (DSP) of the digital photographing apparatus of FIG. 2, according to an embodiment of the invention;
FIG. 6 is an illustrative diagram for describing SAD calculation and reliability determination performed by the DSP of FIG. 5;
FIG. 7 is an example of guiding a user to recapture or not based on reliability determination is output as a message in the DSP of FIG. 5;
FIG. 8 is an illustrative diagram in which a deviation correction degree is displayed as a guideline on the digital photographing apparatus of FIG. 2;
FIG. 9 illustrates a deviation correction result in the digital photographing apparatus of FIG. 2;
FIG. 10 is a flowchart illustrating a method of controlling a digital photographing apparatus, according to an embodiment of the invention;
FIG. 11 is a flowchart illustrating a method of executing the SAD algorithm in the method of FIG. 10, according to an embodiment of the invention; and
FIG. 12 is a flowchart illustrating a method of determining SAD reliability in the method of FIG. 10, according to an embodiment of the invention.

### DETAILED DESCRIPTION

The invention allows various kinds of change or modification and various changes in form, and specific embodiments are illustrated in the drawings and described in detail in the specification. However, it should be understood that the specific embodiments do not limit the invention to a specific disclosed form but include every modified, equivalent, or replaced one within the spirit and technical scope of this disclosure.

Although terms, such as 'first' and 'second', may be used to describe various elements, the elements are not limited by these terms. These terms are used to differentiate a certain element from another element.

The terminology used in the application is used to describe specific embodiments and does not limit the invention. An expression in the singular includes an expression in the plural unless they are clearly different from each other in context. Terms, such as 'include' and 'have', are used to indicate the existence of implemented features, numbers, steps, operations, elements, parts, or a combination thereof without excluding in advance the possibility of existence or addition of one or more other features, numbers, steps, operations, elements, parts, or combinations thereof

The invention can be represented with functional blocks and various processing steps. These functional blocks can be implemented by various hardware and/or software configurations for executing specific functions. For example, the invention may adopt direct circuit configurations, such as memory, processing, logic, and look-up table, for executing various functions under control of one or more processors or by other control devices. Additionally or alternatively, components of the invention can execute the various functions with software programming or software elements. The invention can be implemented by a programming or scripting language, such as C, C++, Java, or assembler, with various algorithms implemented by a combination of a data structure, processes, routines, and/or other programming components. Functional aspects can be implemented with algorithms performed by one or more processors. In addition, the invention may adopt the prior art for electronic environment setup, signal processing and/or data processing. The terms, such as "mechanism", "element", "means", and "configuration", are not to be delimited as mechanical and physical configurations. Accordingly, these terms may include the meaning of a series of routines of software in association with a processor.

The invention will now be described more fully with reference to the accompanying drawings, in which exemplary embodiments of the invention are shown. Like reference numerals in the drawings denote like elements, and thus repetitive descriptions will be omitted.

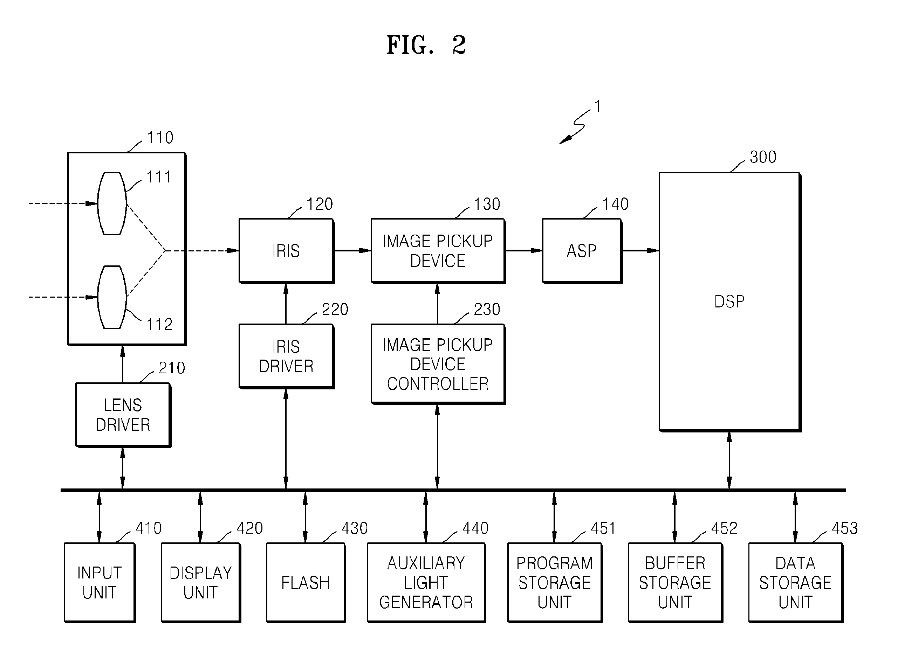

FIG. 2 is a block diagram of a digital camera 1 described as a digital photographing apparatus, according to an embodiment of the invention. However, the digital photographing apparatus is not limited to the digital camera 1 shown in FIG. 2, and may be applied to digital devices such as compact digital cameras, single-lens reflex cameras, hybrid cameras having advantages of a compact digital camera and a single-lens reflex camera, camera phones, Personal Digital Assistants (PDAs), Portable Multimedia Players (PMPs), and any other device capable of capturing or processing 3D images.

Referring to FIG. 2, the digital camera 1 may include a lens unit 110, a lens driver 210, an iris 120, an iris driver 220, an image pickup device 130, an image pickup device controller 230, an Analog Signal Processor (ASP) 140, a DSP 300, an input unit 410, a display unit 420, a flash 430, an auxiliary light generator 430, a program storage unit 451, a buffer storage unit 452, and a data storage unit 453.

The lens unit 110 concentrates an optical signal. In the current embodiment, the lens unit 110 includes a left lens 111 and a right lens 112. The left lens 111 is used to capture a left image of a subject, and the right lens 112 is used to capture a right image of the subject. The left lens 111 and the right lens 112 may be included in the digital camera 1 or assembled outside the digital camera 1.

The iris 120 adjusts the intensity of incident light by adjusting an open/close degree thereof.

The lens driver 210 and the iris driver 220 drive the lens unit 110 and the iris 120, respectively, by receiving a control signal from the DSP 300. The lens driver 210 may include a Voice Coil Motor (VCM), a piezo motor, or a stepping motor. For example, when the lens driver 210 includes a VCM, the VCM may be assembled at a position for surrounding the lens unit 110 to move the left and right lenses 111 and 112. In addition to the VCM, the lens driver 210 may further include a motor driver (not shown) for driving the VCM. The iris driver 220 adjusts an open/close degree of the iris 120, and in particular, performs operations, such as Auto Focus (AF), Auto Exposure (AE) compensation, focus change, and subject depth adjustment by adjusting an iris value (F number).

The optical signal passing through the lens unit 110 forms an image of a subject on a light-reception face of the image pickup device 130. The image pickup device 130 may use a Charge-Coupled Device (CCD), a Complementary Metal-Oxide Semiconductor Image Sensor (CIS), or a high-speed image sensor for converting the optical signal to an electric signal. The image pickup device 130 may adjust its sensitivity under control of the image pickup device controller 230. The image pickup device controller 230 may control the image pickup device 130 in response to a control signal automatically generated by an image signal input in real-time or a control signal manually input by manipulation of a user. The digital camera 1 may further include a shutter (not shown) as a mechanical shutter in which a cover moves upwards and downwards.

The ASP 140 generates a digital image signal by performing noise reduction, gain adjustment, waveform standardization, and analog-to-digital conversion on an analog signal provided from the image pickup device 130.

The input unit 410 is a device for inputting a control signal by the user. The input unit 410 may include a shutter release button for opening and closing the shutter to expose the image pickup device 130 to light for a predetermined time, a power button for controlling supply of power, a wide-angle zoom button and a telescopic zoom button for respectively widening or narrowing an angle of view, character input keys, a mode selection button for selecting a mode such as a camera mode and a play mode, a white balance setting function selection button, and an exposure setting function selection button. The shutter release button may include first and second shutter release buttons. When the first shutter release button is pressed, the digital camera 1 performs a focusing operation and adjusts the intensity of light. Then, the user may press the second shutter release button, and accordingly, the digital camera 1 may capture an image. Although the input unit 410 may have a form of various key buttons, the input unit 410 is not limited thereto and may be implemented in any user-input form, such as a keyboard, a touch pad, a touch screen, or a remote control.

The display unit 420 may include a Liquid Crystal Display (LCD), an organic luminescence display panel, or a Field Emission Display (FED) and display state information of the digital camera 1 or a captured image.

The flash 430 is a device for brightening a subject by emitting a bright light onto the subject when the subject is photographed in a dark place, and a flash mode includes an automatic flash mode, a compulsive light emission mode, a light emission prohibit mode, a red-eye mode, and a slow synchro mode. The auxiliary light generator 440 provides auxiliary light to a subject so that the digital camera 1 can automatically focus on the subject more quickly and correctly when the intensity of light is insufficient or for nighttime photography.

The digital camera 1 also includes the program storage unit 451 for storing programs such as an operation system and applications for control and operation of the digital camera 1, the buffer storage unit 452 for temporarily storing data required during a computation or result data, and the data storage unit 453 for storing image files including image signals and various kinds of information required by the programs.

The digital camera 1 also includes the DSP 300 for processing the digital image signal input from the ASP 140 and controlling components of the digital camera 1 in response to external input signals. The DSP 300 may perform image signal processing for image quality enhancement of an input image signal, such as noise reduction, gamma correction, color filter array interpolation, color matrix, color correction, and color enhancement. In addition, the DSP 300 may generate an image file by compressing image data generated by performing the image signal processing for image quality enhancement. In addition, the DSP 300 may restore (decompress) image data from a generated image file. The compressed image file may be stored in the data storage unit 453. In addition, the DSP 300 may generate control signals for controlling a zoom change, a focus change, and AE compensation by executing programs stored in the program storage unit 451 and providing generated control signals to the lens driver 210, the iris driver 220, and the image pickup device controller 230 to generally control the lens unit 110, the iris 120, and the image pickup device 130, respectively.

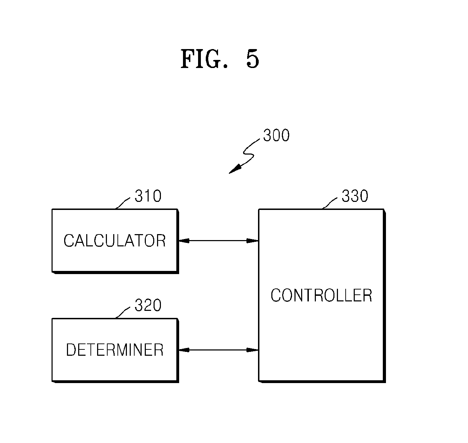

According to the current embodiment, the DSP 300: (A) controls the image pickup device 130 to capture a left image and a right image received from the left lens 111 and the right lens 112, respectively, (B) calculates SAD values of the right image compared with the left image, (C) determines a reliability representing a deviation of a moved position of the right image compared with the left image based on a degree that positions at which smallest SAD values are obtained deviate from an average position, and (D) guides the user to recapture or not based on the determined reliability. A detailed operation of the DSP 300 is described in detail below with reference to FIGS. 5 to 9.

When a left image and a right image are simultaneously input, an algorithm for calculating a difference between the left image and the right image by comparing the left image with the right image is executed, and at this time, the algorithm may output an SAD value for determining reliability of a result value in addition to the difference between the two images. In general, an SAD value is a difference between a left image and a right image at a position (X, Y) in each of the two images while the two images to be compared with each other are being scanned in X and Y directions. A difference between positions (X, Y) of the two images at which the smallest SAD value is obtained indicates a position difference between the two images, and as the smallest SAD value is much less than the other SAD values, reliability of the algorithm is high. Thus, if SAD data can be output in addition to the position difference between the left image and the right image, accuracy of the algorithm may be predicted.

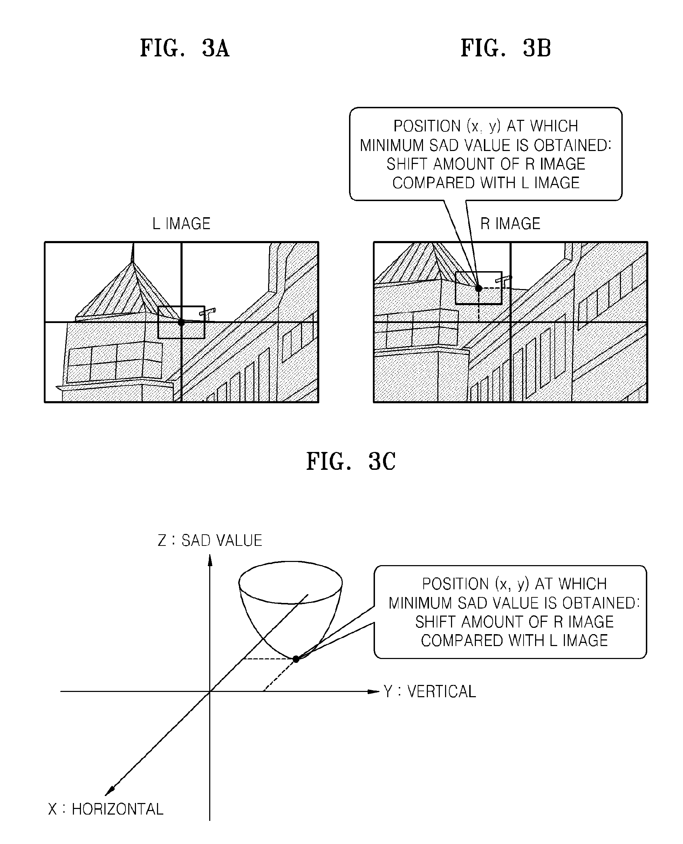

FIG. 3C illustrates a graph of SAD values of left and right images shown in FIGS. 3A and 3B, respectively. For the left and right images shown in FIGS. 3A and 3B, an SAD value at a position (X, Y) of each of the left image and the right image is obtained while the two images to be compared with each other are being scanned in the X and Y directions. Since an SAD value at a position (X, Y) at which the smallest SAD value is obtained is much less than the other SAD values in the graph of FIG. 3C, reliability of the algorithm is high. That is, the nearer to a stee[ conical shape the graph shown in FIG. 3C is, the higher the reliability. Since a difference between the positions (X, Y) of the left image and the right image at which the smallest SAD value is obtained indicates a position difference of the right image compared with the left image, correction may be performed by shifting the right image by the difference between the positions (X, Y) at which the smallest SAD value is obtained.

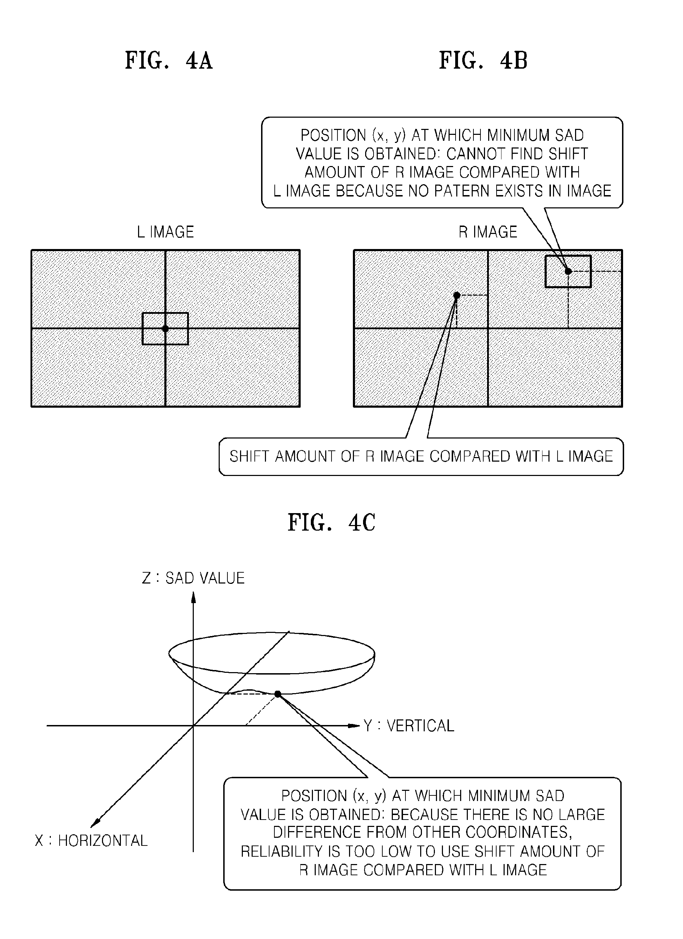

FIG. 4C illustrates a graph of SAD values of other left and right images shown in FIGS 4A and 4B, respectively. For the left and right images shown in FIGS. 4A and 4B, an SAD value at a position (X, Y) of each of the left image and the right image is obtained while the two images to be compared with each other are being scanned in the X and Y directions. Since an SAD value at a position (X, Y) at which the smallest SAD value is obtained is not largely different from the other SAD values in the graph of FIG. 4C (e.g., the SAD graph resembles a shallow bowl), reliability of the algorithm is lower. When the reliability of the algorithm is low, as shown in FIG. 4C, a position (X, Y) at which the smallest SAD value is obtained cannot be as reliably found, and it is more difficult to perform position correction on the right image.

As described above, when a position of a right image compared with a left image is corrected based on reliability of the SAD algorithm, if accurate and reliable determining criteria cannot be known, it may be difficult for the user to capture a higher quality 3D image. Thus, guiding the user to recapture or not by informing the user of a reliability determination result of the SAD algorithm allows the user to capture a high quality 3D image.

FIG. 5 is a detailed block diagram of the DSP 300 of FIG. 2 for guiding the user to recapture or not by informing the user of a reliability determination result of the SAD algorithm. The DSP 300 includes a calculator 310, a determiner 320, and a controller 330.

The calculator 310 calculates SAD values of a right image captured from the right lens 112 compared with a left image captured from the left lens 111.

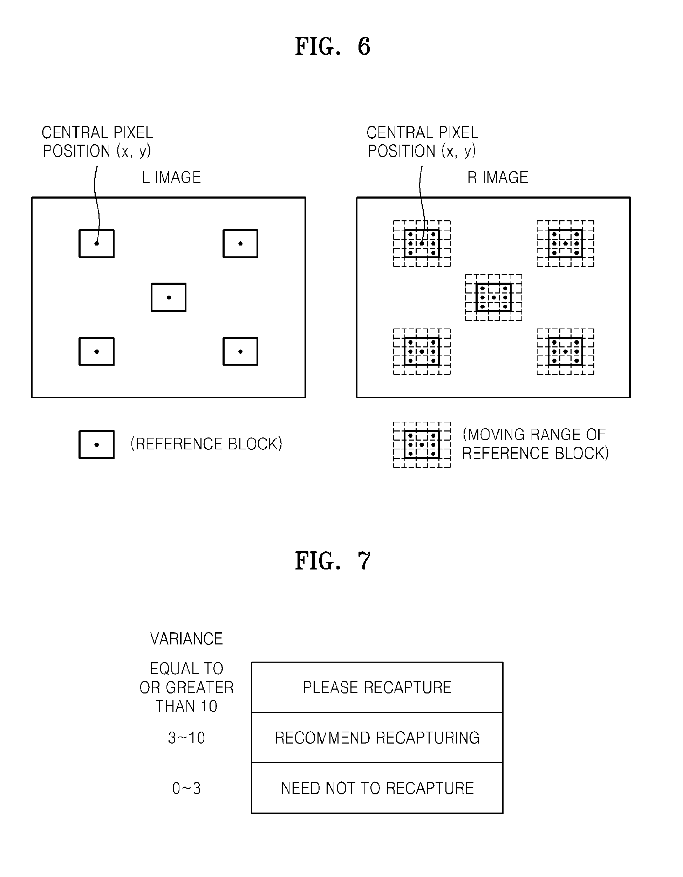

FIG. 6 illustrates a left image and a right image for describing SAD calculation and reliability determination, assuming that the left image is a reference image and the right image is a corresponding image, according to an embodiment of the invention. For the SAD calculation, N reference blocks having different positions are generated in the left image (reference image). The N reference blocks are pixel blocks symmetrically configured based on the central pixel. For example, 32x32 pixels may be set as a single block, and the total number of pixels in a reference block is 1024.

An SAD value is a value obtained by summing all absolute values of pixel differences between the reference image and the corresponding image, i.e., the left image and the right image. The SAD value may be obtained by summing all absolute values of differences between pixels of a reference block of the left image and a corresponding block of the right image when the corresponding block is moved within a moving range while the left image is fixed, as shown in FIG. 6. The movement of a block in the right image within the moving range indicates that a central pixel of the block moves in the right image compared with the left image. When the central pixel of the block in the right image moves, the other pixels of the block also move as much as the central pixel moves. That is, a solid-line block moves to a dashed-line area, and when an SAD value is calculated in each case, an SAD value of the solid-line block at every moved position (x, y) is calculated. This calculation is preferably not performed for the overall image, and is performed by defining a range proper to the accuracy of each system. In the current embodiment, SAD values are calculated by summing all absolute values of differences between pixels of each of the 5 blocks in the right image corresponding to the 5 reference blocks in the left image at each of its moved blocks in the right image within a moving range.

The determiner 320 determines reliability representing a deviation of a moved position of the right image compared with the left image based on a degree that positions at which SAD values calculated by the calculator 310 have the smallest deviation from an average position.

By performing an SAD calculation process in the calculator 310, a position (x, y) of the central pixel of a block having the smallest SAD value is obtained, and this position (x, y) is a moved position of the right image compared with the left image. When this SAD calculation process is performed for several points of an image, positions (x, y) of central pixels of blocks having the smallest SAD value are obtained by the number of positions for which the SAD calculation process is performed. In the embodiment shown in FIG. 5, 5 positions of central pixels of blocks having the smallest SAD value are obtained.

Various methods may be considered to determine reliability of an SAD value of a currently captured image, one of which is to obtain a variance of position values of central pixels of blocks having the smallest SAD value that are obtained for 5 positions shown in FIG. 6. A large variance indicates that the position values of central pixels of blocks having the smallest SAD value that are obtained for 5 positions shown in FIG. 6 significantly deviate from an average position value.

For example, assuming that positions (x, y) of central pixels of blocks having the smallest SAD value are (10, 10), (10, 10), (10, 10), (100, 100), and (100, 100), an average position of the 5 positions is (46, 46). In this case, an average difference between the average position and the positions of the central pixels of the blocks having the smallest SAD value, i.e., a variance of the positions of the central pixels of the blocks having the smallest SAD value, is (43.2, 43.2).

As another example, assuming that positions (x, y) of central pixels of blocks having the smallest SAD value are (50, 50), (50, 50), (50, 50), (50, 50), and (50, 50), an average position of the 5 positions is (50, 50). In this case, an average difference between the average position and the positions of the central pixels of the blocks having the smallest SAD value, i.e., a variance the positions of the central pixels of the blocks having the smallest SAD value, is (0, 0).

The variance in the former case is large, and the variance in the latter case is small, wherein the large variance indicates that reliability is low due to the fact that a deviation of a moved position of the right image compared with the left image that is obtained by using an SAD value for each point is severe, and the small variance indicates that reliability is high due to the fact that a deviation of the moved position is rare.

In the current embodiment, reliability determining criteria may be set as follows as an example. That is, high reliability is determined when a variance value is equal to or less than 3, medium reliability is determined when a variance value is greater than 3 and equal to or less than 10, and low reliability is determined when a variance value is greater than 10.

The controller 330 guides the user to recapture or not based on the reliability determined by the determiner 320. For example, as shown in FIG. 7, the controller 330 generates a message informing the user of recapturing/non-recapturing recommendation based on an SAD reliability determination result determined by the determiner 320, and displays the message on the display unit 420. Referring to FIG. 7, the controller 330 may output a message "need not to recapture" because reliability is high when a variance calculated by the determiner 320 is equal to or less than 3. In addition, the controller 330 may output a message "recommend recapturing" because reliability is medium when a variance calculated by the determiner 320 is greater than 3 and equal to or less than 10. In addition, the controller 330 may output a message "please recapture" because reliability is low when a variance calculated by the determiner 320 is greater than 10.

The user may perform recapturing based on a message output from the controller 330. In addition, when the user maintains a current capturing state based on a message output from the controller 330, the controller 330 corrects a deviation of a moved position value of the right image compared with the left image by using the obtained SAD values. That is, the controller 330 corrects a deviation corresponding to a difference value between a position of a central pixel of a reference block in the left image and a position of a central pixel of a block having the smallest SAD value in the right image. The controller 330 performs the correction by moving a read start position of the right image compared with the left image by the deviation and reading the right image for the left image and the right image stored in the buffer storage unit 452.

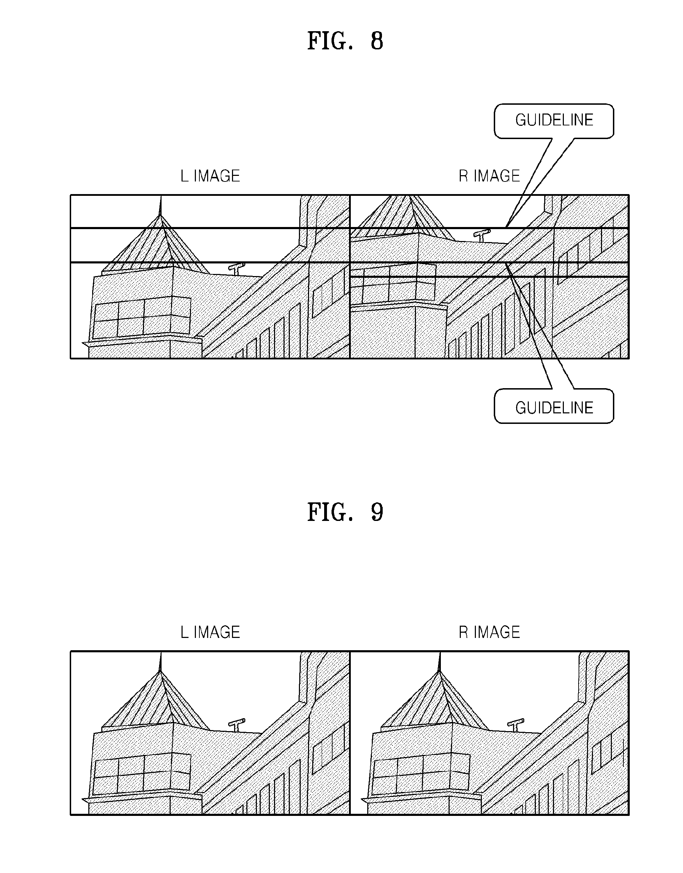

Before the position deviation correction, as shown in FIG. 8, the controller 330 displays on the display unit 420 how much deviation will be corrected as a guideline so that the user can view a correction degree. If the user determines based on the guideline that there is a problem in the correction, the user may manually correct the deviation by referring to the guideline. For the manual correction, the user may move a read start position of an image stored in the buffer storage unit 452 to be able to shift the left image and the right image on a user interface.

After the deviation correction, the controller 330 displays the deviation-corrected left and right images on the display unit 420 so that the user can view a deviation correction result, as shown in FIG. 9. In a very special case, because correction of the difference between the left and right images may not be performed as it is supposed to be, the controller 330 allows the user to view a deviation correction result after correction.

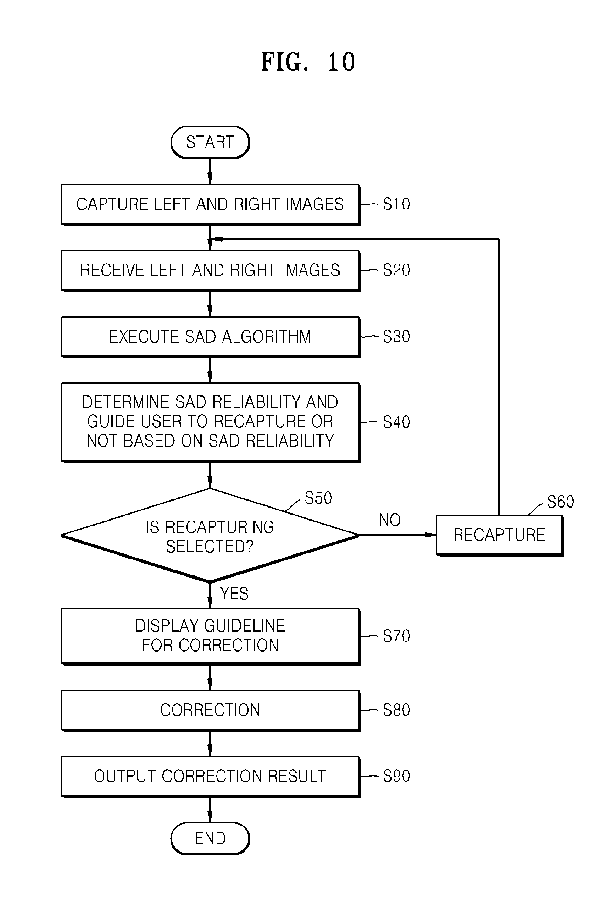

FIG. 10 is a flowchart illustrating a method of controlling a digital photographing apparatus, according to an embodiment of the invention. The method of FIG. 10 may be performed in the digital photographing apparatus of FIG. 2, and a main operating algorithm of the method of FIG. 10 may be performed in the DSP 300 with cooperation of surrounding components in the digital photographing apparatus.

Referring to FIG. 10, in operation S10, the DSP 300 captures a left image and a right image when a user presses the shutter release button.

In operation S20, the DSP 300 receives the images captured through the left lens 111 and the right lens 112.

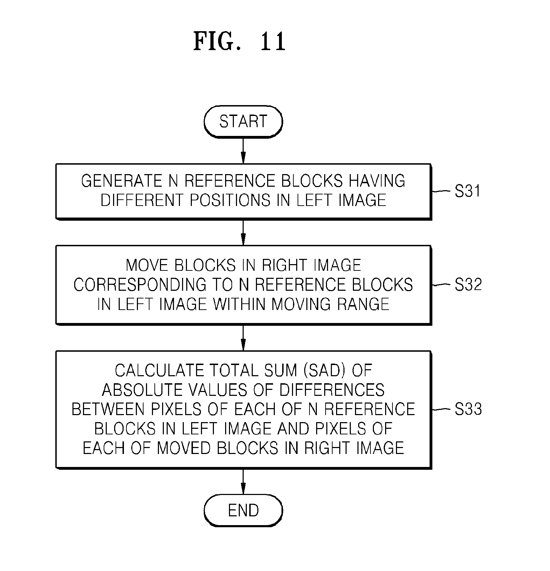

In operation S30, the DSP 300 executes the SAD algorithm by receiving the captured left and right images as inputs. FIG. 11 is a flowchart illustrating a method of executing the SAD algorithm, according to an embodiment of the invention. Referring to FIG. 11, in operation S31, the DSP 300 generates N reference blocks having different positions in the left image by setting the left image as a reference image and the right image as a corresponding image. Here, the N reference blocks are pixel blocks symmetrically configured based on a central pixel. In operation S32, the DSP 300 fixes the left image and moves a block of the right image corresponding to each of the N reference blocks in the left image within a moving range. Here, the movement of a block in the right image within the moving range indicates that a central pixel of the block moves in the right image compared with the left image. When the central pixel of the block in the right image moves, the other pixels of the block also move as much as the central pixel moves. In operation S33, the DSP 300 calculates a total sum of absolute values of differences between pixels of each of the N reference blocks in the left image and pixels of each of moved blocks in the right image.

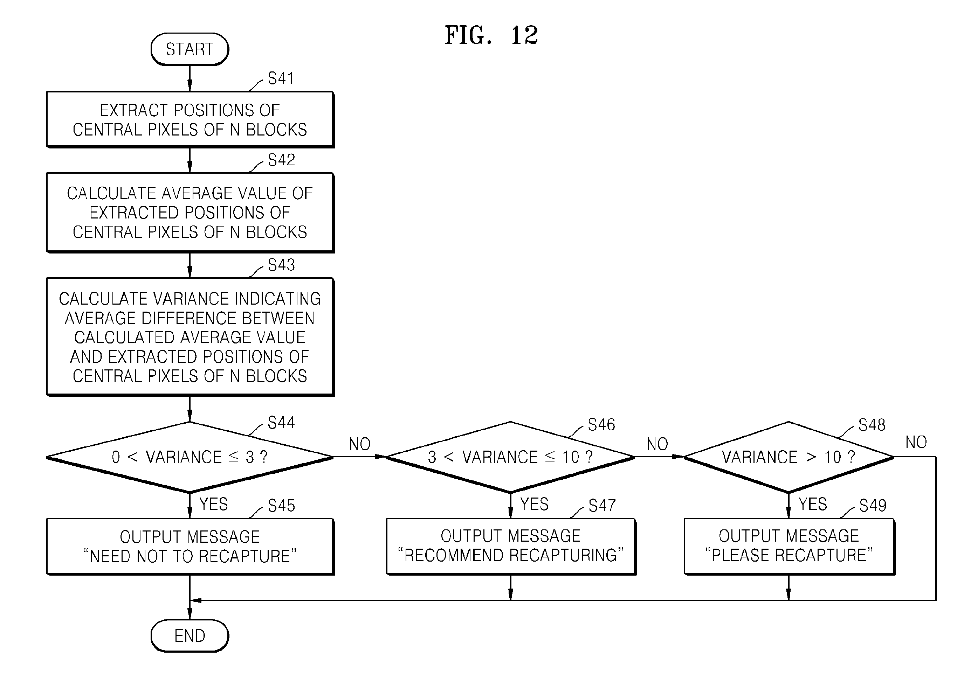

Referring back to FIG. 10, in operation S40, the DSP 300 determines reliability indicating a deviation of a moved position of the right image compared with the left image based on a degree that positions at which the smallest SAD values are obtained deviate from an average position, and guides the user to recapture or not based on the determined SAD reliability. FIG. 12 is a flowchart illustrating a method of determining SAD reliability, according to an embodiment of the invention. Referring to FIG. 12, in operation S41, the DSP 300 extracts positions of central pixels of N blocks at which the smallest SAD values are obtained from a result obtained by performing the SAD algorithm. In operation S42, the DSP 300 calculates an average value of the extracted positions of the central pixels of the N blocks. In operation S43, the DSP 300 calculates a variance indicating an average difference between the calculated average value and position values of the central pixels of the N blocks. Here, a large variance indicates that reliability is low due to the fact that a deviation of a moved position of the right image compared with the left image that is obtained by using an SAD value for each point is large, and a small variance indicates that reliability is high due to the fact that a deviation of the moved position is small. If it is determined in operation S44 that the variance is equal to or less than 3, the DSP 300 determines high reliability and outputs a message "need not to recapture" in operation S45. If it is determined in operation S46 that the variance is greater than 3 and equal to or less than 10, the DSP 300 determines medium reliability and outputs a message "recommend recapturing" in operation S47. If it is determined in operation S48 that the variance is greater than 10, the DSP 300 determines low reliability and outputs a message "please recapture" in operation S49.

Referring back to FIG. 10, in operation S50, the DSP 300 determines whether the user selects recapturing after the message is output.

If the user selects recapturing, the DSP 300 captures a left image and a right image when the user presses the shutter release button in operation S60 and proceeds back to operation S20.

Otherwise, if the user does not select recapturing, i.e., if high reliability is determined because the variance is equal to or less than 3, the DSP 300 displays a guideline for correction in addition to the captured left and right images on the display unit 420 in operation S70 so that the user can view a correction degree.

After the guideline is displayed, the DSP 300 corrects the deviation of the moved position of the right image compared with the left image by using SAD values in operation S80. That is, the DSP 300 corrects a deviation corresponding to a difference between a position of the central pixel of a reference block of the left image and a position of the central pixel of a block having the smallest SAD value in the right image. The DSP 300 performs the correction by moving a read start position of the right image compared with the left image and reading the right image for the left and right images stored in the buffer storage unit 452. At this time, if the user who has viewed the guideline determines that there is a problem in the correction, the DSP 300 allows the user to manually perform the correction by referring to the guideline. For the manual correction, the DSP 300 moves a read start position of an image stored in the buffer storage unit 452 so that the user can shift the left image and the right image on a user interface.

After the deviation correction is completed, the DSP 300 displays the deviation-corrected left and right images on the display unit 420 in operation S90 so that the user can view the correction result.

As described above, by determining reliability by a deviation degree of a left image and a right image to guide a user to use a correction algorithm only if reliability equal to or more than a predetermined level is secured and finally viewing an image to which an automatic correction algorithm is applied to perform fine adjustment, the user may capture higher quality 3D images.

The embodiments disclosed herein may include a memory for storing program data, a processor for executing the program data to implement the methods and apparatus disclosed herein, a permanent storage such as a disk drive, a communication port for handling communication with other devices, and user interface devices such as a display, a keyboard, a mouse, etc. When software modules are involved, these software modules may be stored as program instructions or computer-readable codes, which are executable by the processor, on a non-transitory or tangible computer-readable media such as a read-only memory (ROM), a random-access memory (RAM), a compact disc (CD), a digital versatile disc (DVD), a magnetic tape, a floppy disk, an optical data storage device, an electronic storage media (e.g., an integrated circuit (IC), an electronically erasable programmable read-only memory (EEPROM), a flash memory, etc.), a quantum storage device, a cache, and/or any other storage media in which information may be stored for any duration (e.g., for extended time periods, permanently, for brief instances, for temporary buffering, for caching, etc.). As used herein, a computer-readable storage medium expressly excludes any computer-readable media on which signals may be propagated. However, a computer-readable storage medium may include internal signal traces and/or internal signal paths carrying electrical signals thereon.

Any references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of this disclosure, reference has been made to the embodiments illustrated in the drawings, and specific language has been used to describe these embodiments. However, no limitation of the scope of this disclosure is intended by this specific language, and this disclosure should be construed to encompass all embodiments that would normally occur to one of ordinary skill in the art in view of this disclosure.

Disclosed embodiments may be described in terms of functional block components and various processing steps. Such functional blocks may be realized by any number of hardware and/or software components configured to perform the specified functions. For example, the embodiments may employ various integrated circuit components (e.g., memory elements, processing elements, logic elements, look-up tables, and the like) that may carry out a variety of functions under the control of one or more processors or other control devices. Similarly, where the elements of the embodiments are implemented using software programming or software elements, the embodiments may be implemented with any programming or scripting language such as C, C++, Java, assembler, or the like, using any combination of data structures, objects, processes, routines, and other programming elements. Functional aspects may be implemented as instructions executed by one or more processors. Furthermore, the embodiments could employ any number of conventional techniques for electronics configuration, signal processing, control, data processing, and the like. The words "mechanism" and "element" are used broadly and are not limited to mechanical or physical embodiments, but can include software routines in conjunction with processors, etc.

The particular implementations shown and described herein are illustrative examples and are not intended to otherwise limit the scope of this disclosure in any way. For the sake of brevity, conventional electronics, control systems, software development, and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the embodiments unless the element is specifically described as "essential" or "critical".

The use of the terms "a," "an," "the," and similar referents in the context of describing the embodiments (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. The steps of all methods described herein can be performed in any suitable order unless otherwise indicated herein or otherwise clearly contradicted by context. Moreover, one or more of the blocks and/or interactions described may be changed, eliminated, sub-divided, or combined; and disclosed processes may be carried out sequentially and/or carried out in parallel by, for example, separate processing threads, processors, devices, discrete logic, circuits, etc. The examples provided herein and the exemplary language (e.g., "such as" or "for example") used herein are intended merely to better illuminate the embodiments and does not pose a limitation on the scope of this disclosure unless otherwise claimed. In view of this disclosure, numerous modifications and adaptations will be readily apparent to those skilled in this art without departing from the spirit and scope of this disclosure.

Although a few preferred embodiments have been shown and described, it will be appreciated by those skilled in the art that various changes and modifications might be made without departing from the scope of the invention, as defined in the appended claims.

## Claims

1. A method for controlling of a digital photographing apparatus, the method comprising:
capturing (S10) a left image and a right image received from a left lens and a right lens, respectively;
calculating Sum-of-Absolute-Difference (SAD) values (S20) of the right image compared with the left image;
determining (S40) a reliability indicating a deviation of a moved position of the right image compared with the left image based on a degree that positions at which smallest SAD values are obtained deviate from an average position; and
guiding a user (S70) to recapture or not based on the determined reliability.

2. The method of claim 1, wherein the guiding the user to recapture or not based on the determined reliability is output as a message (S70).

3. The method of claim 1, wherein the guiding comprises guiding the user to recapture when the determined reliability is greater than a first reference value.

4. The method of claim 1, wherein the guiding comprises recommending the user to recapture when the determined reliability is equal to or less than a first reference value and greater than a second reference value.

5. The method of claim 1, wherein the guiding comprises guiding the user to maintain a current capturing state when the determined reliability is equal to or less than a reference value.

6. The method of claim 5, further comprising correcting the deviation of the moved position of the right image compared with the left image after guiding the user to maintain the current capturing state.

7. The method of claim 6, wherein the correcting of the deviation comprises: moving a read start position of the right image compared with the left image by the deviation; and reading the right image.

8. The method of claim 6, further comprising displaying a deviation correction degree as a guideline before correcting the deviation.

9. The method of claim 8, wherein the correcting of the deviation comprises adjusting the deviation correction degree by moving the guideline in response to user input.

10. The method of claim 6, further comprising displaying the deviation-corrected left and right images after correcting the deviation.

11. The method of claim 1, wherein the calculating of the SAD values comprises:
generating N reference blocks having different positions in the left image;
moving blocks in the right image corresponding to the first to Nth reference blocks in the left image within a moving range; and
calculating SAD values by summing differences between pixels of each of the first to Nth reference blocks and pixels of each of the moved blocks.

12. The method of claim 1, wherein the determining of the reliability comprises:
extracting positions of N blocks at which the smallest SAD value is obtained from the right image;
calculating an average value of the N extracted block positions;
calculating an average difference between the calculated average value and position values of the N blocks; and
determining low reliability if the average difference is greater than a first reference value, medium reliability if the average difference is equal to or less than the first reference value and greater than a second reference value, and high reliability if the average difference is equal to or less than the second reference value.

13. A digital photographing apparatus (300) comprising:
a calculator (310) for calculating Sum-of-Absolute-Difference (SAD) values of a right image captured from a right lens compared with a left image captured from a left lens;
a determiner (320) for determining a reliability indicating a deviation of a moved position of the right image compared with the left image based on a degree that positions at which smallest SAD values are obtained deviate from an average position; and
a controller (330) for guiding a user to recapture or not based on the determined reliability.

14. The digital photographing apparatus of claim 13, wherein the controller guides the user to recapture when the determiner determines the reliability as a low reliability that is greater than a first reference value, recommends the user to recapture when the determiner determines the reliability as a medium reliability that is equal to or less than the first reference value and greater than a second reference value, and guides the user to maintain a current capturing state when the determiner determines the reliability as a high reliability that is equal to or less than the second reference value.

15. The digital photographing apparatus of claim 13, wherein, if the determined reliability is equal to or less than the second reference value, the controller guides the user to maintain the current capturing state and corrects a deviation of a moved position of the right image compared with the left image.
